(19) Europäisches Patentamt
European Patent Office
Office européen des brevets

(11) EP 1 373 418 B1

(12) **EUROPÄISCHE PATENTSCHRIFT**

(45) Veröffentlichungstag und Bekanntmachung des Hinweises auf die Patenterteilung:
**30.04.2008 Patentblatt 2008/18**

(21) Anmeldenummer: **02722237.1**

(22) Anmeldetag: **19.03.2002**

(51) Int Cl.:
***C09D 7/02** (2006.01)* ***C09D 17/00** (2006.01)*
***B01F 17/00** (2006.01)*

(86) Internationale Anmeldenummer:
**PCT/EP2002/002995**

(87) Internationale Veröffentlichungsnummer:
**WO 2002/079331 (10.10.2002 Gazette 2002/41)**

(54) **VERWENDUNG VON FETT(METH)ACRYLATEN ZUR PIGMENTDISPERGIERUNG**

USE OF FATTY (METH)ACRYLATES FOR DISPERSING PIGMENTS

UTILISATION DE (METH)ACRYLATES GRAS POUR LA DISPERSION DE PIGMENTS

(84) Benannte Vertragsstaaten:
**AT BE CH CY DE DK ES FI FR GB GR IE IT LI LU MC NL PT SE TR**

(30) Priorität: **28.03.2001 DE 10115300**

(43) Veröffentlichungstag der Anmeldung:
**02.01.2004 Patentblatt 2004/01**

(73) Patentinhaber: **Cognis IP Management GmbH**
**40589 Düsseldorf (DE)**

(72) Erfinder:
- **SULZBACH, Horst**
**27721 Ritterhude (DE)**
- **WESTFECHTEL, Alfred**
**40724 Hilden (DE)**
- **ZANDER, Lars**
**40597 Düsseldorf (DE)**
- **HÖFER, Rainer**
**40477 Düsseldorf (DE)**
- **FIES, Matthias**
**47800 Krefeld (DE)**

(56) Entgegenhaltungen:
**DE-A- 19 512 551** **GB-A- 1 407 898**
**US-A- 3 125 592** **US-A- 5 336 313**

EP 1 373 418 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

### Gebiet der Erfindung

Die vorliegende Erfindung betrifft die Verwendung von Fett(meth)acrylaten zur Pigmentdispergierung.

### Stand der Technik

Als Dispergiermittel werden Substanzen bezeichnet, die das Dispergieren von Teilchen in einem Medium erleichtern, indem sie die Grenzflächenspannung zwischen den beiden Komponenten erniedrigen.

Es handelt sich dabei im allgemeinen um oberflächenaktive Stoffe von anionen- oder kationenaktiver sowie nichtionogener Struktur.

Durch ein Dispergiermittel wird die Dispergierarbeit wesentlich erniedrigt. Dispergierte Feststoffe können aufgrund gegenseitiger Anziehungskräfte nach dem Dispergiervorgang wieder zum Reagglomerieren neigen. Die Verwendung von Dispergiermitteln wirkt auch der Reagglomerationsneigung der Feststoffe entgegen.

Besonders hohe Anforderungen an das verwendete Dispergiermittel werden bei der Dispergierung von Pigmenten, wie Farb- oder magnetischen Pigmenten, gestellt. Eine unzulängliche Dispergierung macht sich durch einen Viskositätsanstieg in flüssigen Systemen, Brillanzverluste und Farbtonverschiebungen bemerkbar.

Eine besonders gute Dispersion des Farbpigmentes ist bei Tinten zur Verwendung in Tintenstrahldruckern (Inkjet-Tinten) erforderlich, um einen ungehinderten Durchgang der Farbpigmentteilchen durch die oft nur einen Durchmesser von wenigen Mikrometern aufweisenden Düsen des Druckkopfes zu gewährleisten. Außerdem muss in den Betriebspausen des Druckers ein Agglomerieren der Pigmentteilchen und ein damit zusammenhängendes Verstopfen der Druckerdüsen vermieden werden.

Desgleichen ist eine besonders gute Dispersion der Farbpigmente bei Beschichtungen harter Oberflächen von Bedeutung.

EP-B-610 534 beschreibt modifizierte Copolymere als Pigmentdispergatoren für wäßrige Beschichtungszusammensetzungen.

WO 00/17250 beschreibt Dispergiermittel, die durch Umsetzung von Isocyanaten mit bestimmten polymeren Verbindungen, die an einem Kettenende mit speziellen reaktive Gruppen terminiert ist.

### Beschreibung der Erfindung

Aufgabe der vorliegenden Erfindung war die Bereitstellung von Substanzen, die sich zur Pigmentdispergierung eignen. Unter Pigmenten werden wie in der Fachwelt allgemein üblich Substanzen verstanden, die in Lösungsmitteln oder Bindemitteln praktisch unlöslich sind und die organische oder anorganische, bunte oder unbunte Farbmittel sind. Diese Definition ist nachzulesen in: Römpps Chemie-Lexikon, Stuttgart 1974, Seite 2693-2695.

Eine weitere Aufgabe bestand darin, daß die zur Pigmentdispergierung geeigneten Substanzen bei 23 °C gießbar sein sollten; insbesondere sollten sich diese Substanzen durch eine Viskosität von weniger als 30.000 mPas und vorzugsweise von weniger als 20.000 mPas (gemessen in Substanz nach Brookfield bei 23 °C) auszeichnen, wodurch sichergestellt ist, daß diese Substanzen gut handhabbar, d.h. auf Grund ihrer relativ geringen Viskosität insbesondere gießbar und/oder pumpbar sind.

Die genannte Aufgabe wurde überraschenderweise gelöst durch Fett(meth)acrylate, erhältlich durch Umsetzung von epoxidierten Fettsäurestern und/oder epoxidierten Triglyceriden mit Acrylsäure und/oder Methacrylsäure, wobei die Umsetzung so geführt wird, daß der %-EpO-Gehalt der Fett(meth)acrylate unterhalb von 0,6 liegt und wobei für die den Fett(meth)acrylaten zu Grunde liegenden epoxidierten Fettsäurester und/oder epoxidierten Triglyceride folgende Maßgaben gelten:

a) Der %-EpO-Gehalt der eingesetzten epoxidierten Fettsäurestern und/oder epoxidierten Triglyceride liegt oberhalb von 6,4.
b) Weniger als 20 mol-% der den epoxidierten Fettsäurestern und/oder epoxidierten Triglyceriden zu Grunde liegenden Fettsäurebausteine enthalten 3 oder mehr C=C-Doppelbindungen pro Fettsäurebaustein.
c) Mehr als 60 mol-% der den epoxidierten Fettsäurestern und/oder epoxidierten Triglyceriden zu Grunde liegenden Fettsäurebausteine enthalten 2 C=C-Doppelbindungen pro Fettsäurebaustein.

Gegenstand der vorliegenden Erfindung ist dementsprechend die Verwendung von Fett(meth)acrylaten zur Pigmentdispergierung, wobei die Fett(meth)acrylate erhältlich sind durch Umsetzung von epoxidierten Fettsäurestern und/oder epoxidierten Triglyceriden mit Acrylsäure und/oder Methacrylsäure, wobei die Umsetzung so geführt wird, daß der %-EpO-Gehalt der Fett(meth)acrylate unterhalb von 0,6 liegt und wobei für die den Fett(meth)acrylaten zu Grunde

liegenden epoxidierten Fettsäurester und/oder epoxidierten Triglyceride folgende Maßgaben gelten:

d) Der %-EpO-Gehalt der eingesetzten epoxidierten Fettsäurestern und/oder epoxidierten Triglyceride liegt oberhalb von 6,4.
e) Weniger als 20 mol-% der den epoxidierten Fettsäurestern und/oder epoxidierten Triglyceriden zu Grunde liegenden Fettsäurebausteine enthalten 3 oder mehr C=C-Doppelbindungen pro Fettsäurebaustein.
f) Mehr als 60 mol-% der den epoxidierten Fettsäurestern und/oder epoxidierten Triglyceriden zu Grunde liegenden Fettsäurebausteine enthalten 2 C=C-Doppelbindungen pro Fettsäurebaustein.

Als Pigmente können an sich alle dem Fachmann einschlägig bekannten Substanzen eingesetzt werden. Insbesondere werden hier alle in der zitierten Stelle des Römpp Chemie-Lexikons (siehe oben) genannten speziellen Pigmente im Rahmen der vorliegenden Erfindung einbezogen. Selbstverständlich fallen unter die Definition der Pigmente neben den Farbpigmenten auch Weißpigmente, Schwarzpigmente sowie magnetische Pigmente.
Unter Fett(meth)acrylaten sind sowohl Fettacrylate als auch Fettmethacrylate zu verstehen. Fettacrylate und Fettmethacrylate können im Rahmen der vorliegenden Erfindung sowohl als Einzelsubstanzen, als auch im Gemisch untereinander eingesetzt werden. Dabei können sowohl Gemische von Fettacrylaten, als auch Gemische von Fettmethacrylaten eingesetzt werden. Ebenso können Gemische eingesetzt werden, die sowohl Fettacrylate als auch Fettmethacrylate enthalten.

<u>Zu Maßgabe a)</u>

Die dem Fachmann bekannte Epoxidzahl (%EpO-Gehalt) gibt an, wieviel Gramm Oxiran-Sauerstoff in 100 Gramm einer Probe enthalten sind. Die Epoxidzahl wird durch Titration ermittelt. Hierzu sei ausdrücklich auf den Beispielteil verwiesen, wo die im Rahmen dieser Erfindung zu benutzende Meßmethode ausführlich dargestellt ist.
In einer Ausführungsform liegt der %-EpO-Gehalt der eingesetzten epoxidierten Fettsäurestern und/oder epoxidierten Triglyceride oberhalb von 7,0.

<u>Zu Maßgabe b)</u>

In einer Ausführungsform enthalten weniger als 10 mol-% der den epoxidierten Fettsäurestern und/oder epoxidierten Triglyceriden zu Grunde liegenden Fettsäurebausteine 3 oder mehr C=C-Doppelbindungen pro Fettsäurebaustein.
In einer bevorzugten Ausführungsform enthalten weniger als 5 mol-% der den epoxidierten Fettsäurestern und/oder epoxidierten Triglyceriden zu Grunde liegenden Fettsäurebausteine 3 oder mehr C=C-Doppelbindungen pro Fettsäurebaustein.

<u>Zu Maßgabe c)</u>

In einer Ausführungssform enthalten mehr als 65 mol-% der den epoxidierten Fettsäurestern und/oder epoxidierten Triglyceriden zu Grunde liegenden Fettsäurebausteine 2 C=C-Doppelbindungen pro Fettsäurebaustein.
In einer bevorzugten Ausführungssform enthalten mehr als 70 mol-% der den epoxidierten Fettsäurestern und/oder epoxidierten Triglyceriden zu Grunde liegenden Fettsäurebausteine 2 C=C-Doppelbindungen pro Fettsäurebaustein.
Eine optionale Ausführungssform der Erfindung ist dadurch gekennzeichnet, daß weniger als 20 mol-% - vorzugsweise weniger als 10 mol-% - der den epoxidierten Fettsäurestern und/oder epoxidierten Triglyceriden zu Grunde liegenden Fettsäurebausteine frei von C=C-Doppelbindungen sind, in dem Sinne, daß es sich bei diesen Fettsäurebausteinen um gesättigte Fettsäuren handelt.

<u>Zur Herstellung der Fett(meth)acrylate</u>

Wie bereits ausgeführt sind die erfindungsgemäß einzusetzenden Fett(meth)acrylate erhältlich durch Umsetzung von epoxidierten Fettsäurestern und/oder epoxidierten Triglyceriden mit Acrylsäure und/oder Methacrylsäure. Dabei soll der %-EpO-Gehalt der Fett(meth)acrylate auf Werte unterhalb von 0,6 eingestellt werden.
Sofern zur Herstellung der erfindungsgemäßen Fett(meth)acrylate epoxidierte Fettsäurester und/oder epoxidierte Triglyceride mit Acrylsäure und/oder Methacrylsäure umgesetzt werden, bedeutet die genannte Bedingung, daß die in den Ausgangsstoffen, nämlich den epoxidierten Fettsäurestern und/oder epoxidierten Triglyceriden vorhandenen Oxiranringe weitgehend ringgeöffnet werden. Vorzugsweise führt man die Oxiran-Ringöffnung nahezu quantitativ durch.
Die Herstellung epoxidierter Fettsäurester bzw. epoxidierter Triglyceride ist seit langem bekannt. Hierzu werden

Ester von olefinisch ungesättigten Fettsäuren bzw. Triglyceriden, die als Fettsäurebausteine olefinisch ungesättigte Fettsäuren enthalten, der Epoxidation unterworfen, wobei eine oder mehrere Doppelbindungen pro Molekül in Oxirangruppen überführt werden.

Als Fettsäurebausteine der zu epoxidierenden Fettsäureester sind Carbonsäuren mit 12 bis 24 C-Atomen, die mindestens eine olefinische Doppelbindung im Molekül enthalten, bevorzugt. Bei den zu epoxidierenden Triglyceriden sind solche Triglyceride bevorzugt, bei denen mindestens ein Fettsäurebaustein pro Triglyceridmolekül mindestens eine olefinische Doppelbindung enthält.

Beispiele geeigneter epoxidierter Triglyceride sind die Epoxidationsprodukte folgender ungesättigter Öle: Linolaöl, Hanföl, Kugeldistelöl.

Die Herstellung geschieht insbesondere durch Umsetzung der genannten ungesättigten Öle mit Perameisen- oder Peressigsäure.

Die Addition von Acryl- und/oder Methacrylsäure an die genannten epoxidierten Fettsäurester bzw. epoxidierten Triglyceride ist dem Fachmann an sich bekannt. Sie ist im Rahmen der vorliegenden Erfindung so durchzuführen, daß der %EpO-Gehalt der Fett(meth)acrylate unterhalb von 0,6 liegt.

Wie bereits gesagt ist es jedoch besonders bevorzugt, die Addition von Acryl- und/oder Methacrylsäure an die genannten epoxidierten Fettsäurester bzw. epoxidierten Triglyceride in der Weise durchzuführen, daß mehr oder weniger alle Oxiranringe geöffnet und in HO-$CH_2$-$CH_2$-OR-Gruppen überführt werden, in denen R einen Acrylat- bzw. Methacrylatrest bedeutet.

Pigmentkonzentrate

Ein weiterer Gegenstand der Erfindung bezieht sich auf Pigmentkonzentrate. Diese bestehen aus

- 0,1 bis 70 Gew.-% ein oder mehrerer Pigmente,
- 0,1 bis 30 Gew.-% ein oder mehrerer Fett(meth)acrylate,
- 0 oder 15 bis 85 Gew.-% eines flüssigen Trägermediums.

Selbstverständlich muß sich die Summe aller Bestandteile zu 100 Gew.-% ergänzen.

Das flüssige Trägermedium kann ein organisches Trägeröl oder Wasser sein. Solche Trägermedien sind dem Fachmann bekannt. Sofern es sich bei dem Trägermedium um Wasser handelt, wird zusätzlich ein organisches Lösungsmittel und/oder ein Tensid eingesetzt. Als Lösungsmittel kommen an sich alle dem Fachmann bekannten organischen Lösungsmittel in Betracht. Bevorzugt sind diejenigen Lösungsmittel, die üblicherweise in wäßrigen Beschichtungszusammensetzungen zum Einsatz kommen.

Die Ausführungsformen, bei denen die Pigmentkonzentrate lediglich aus den beiden erstgenannten Komponenten bestehen, die also frei sind von einem flüssigen Trägermedium, kommen in Pastenform zum Einsatz.

In einer Ausführungsform sind die Pigmentkonzentrate Wasser-haltige Systeme und bestehen aus:

- 0,1 bis 70 Gew.-% ein oder mehrerer Pigmente,
- 0,1 bis 30 Gew.-% ein oder mehrerer Fett(meth)acrylate,
- 15 bis 85 Gew.-% Wasser,
- 0 oder 0,1 bis 20 Gew.-% Lösungsmittel,
- 0 oder 0,1 bis 20 Gew.-% Tenside,

wobei die Summe der beiden letztgenannten Komponenten nicht 0 sein darf. Diese Systeme stellen ebenfalls Pigmentkonzentrate dar, können jedoch in dieser speziellen Ausführungsform als wäßrige Pigmentdispersionen bezeichnet werden.

Diese erfmdungsgemäßen Pigmentkonzentrate eignen sich insbesondere für die Einarbeitung in wäßrige Beschichtungszusammensetzungen.

## Beispiele

### A) Meßmethoden

**%EpO:** Zur Charakterisierung des Gehalts von Verbindungen an Oxirangruppen ("Epoxidgruppen") wurde eine Epoxidtitration durchgeführt. Die dabei erhaltene **Epoxidzahl (%EpO)** gibt an, wieviel Gramm Oxiran-Sauerstoff in 100 Gramm einer Probe enthalten sind.

Der Titration liegt folgendes Prinzip zu Grunde: Man fügt eine Lösung mit überschüssigem Tetraethylammoniumbromid zur Probe, die Oxiranringe enthält. Danach titriert man die Mischung mit einer Lösung von Perchlorsäure

in Eisessig, wobei eine äquimolare Menge Bromwasserstoff freigesetzt wird. Der Bromwasserstoff reagiert unter Ringöffnung mit den Oxiranringen und bildet das entsprechende Bromhydrin.

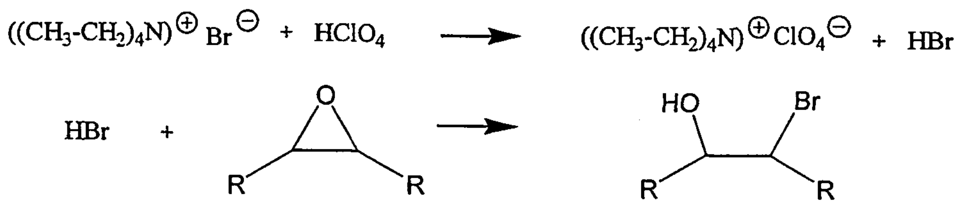

Als Indikator setzt man Kristallviolett ein. Die Bestimmung setzt die Abwesenheit von Wasser, Basen und Aminen voraus.
Es kamen folgende Reagentien zum Einsatz: (1) 0,1-N-Perchlorsäure (Fa. Merck) in Eisessig; (2) Tetraethylammoniumbromid (Fa. Fluka) in Form einer Lösung von 100 g Tetraethylammoniumbromid in 400 ml Eisessig; (3) Kristallviolett (Fa. Merck); zur Herstellung der Indikatorlösung wurden 0,2 g Kristallviolett in 100 ml Eisessig gelöst.
Durchführung: 0,2 bis 0,5 g der Probe, die Oxiranringe enthält werden in einem Erlenmeyerkolben vorgelegt. Die Probe wird in 50 ml wasserfreiem Aceton gelöst. Dann fügt man 10 ml Tetraethylammoniumbromidlösung (siehe oben) und 3 Tropfen Kristallviolettlösung (siehe oben) hinzu. Die Mischung wird mit einer 0,1-N Lösung von Perchlorsäure in eisessig titriert. Der Endpunkt ist erreicht, sobald die Farbe sich von blau nach grün ändert.
Vor Durchführung der eigentlichen Titration führt man eine Blindprobe durch (diese enthält keine Oxiranverbindung), um Meßfehler auszuschließen.
Auswertung: Der Epoxidgehalt %EpO wird wie folgt berechnet:

$$\% \ EpO = [(a - b) * 0{,}160] / E$$

a : = Milliliter 0,1 n $HClO_4$ Lösung, die zur Titration benötigt wird
b : = Milliliter 0,1 n $HClO_4$ Lösung, die im Blindversuch benötigt wird
E : = Einwaage der Probe in Gramm

**B) Herstellung und Prüfung von Fettacrylaten**

**Tabelle1: Kennzahlen der eingesetzten Öle**

| | | Fettsäurespektrum* | | | |
|---|---|---|---|---|---|
| | ***Jodzahl*** | *16: 0 + 18:0* | *18:1* | *18:2* | *18:3* |
| Sojaöl | 130 | 19 | 21 | 53 | 7 |
| Leinöl | 180 | 10 | 17 | 14 | 59 |
| Hanföl | 162 | 9 | 12 | 56 | 21 |
| Linolaöl | 140 | 10 | 16 | 72 | 2 |

* wie dem Fachmann bekannt gibt die Zahl vor dem Doppelpunkt die Kettenlänge an (Anzahl der C-Atome), die Zahl hinter dem Doppelpunkt die Anzahl der C=C-Doppelbindungen.

Um gute Materialeigenschaften zu erhalten wurden epoxidierte Fette und Öle mit dem maximal erreichbaren Oxirangehalt verwendet.

Im Falle von epoxidiertem Leinöl und Hanföl betrug dieser ca. 8,2 %EpO, da bei höheren Gehalten eine Verfestigung eintritt. Für epoxidiertes Linolaöl betrug der Epoxidgehalt ca. 7,1 %EpO und für epoxidiertes Sojaöl ca. 6,5 % EpO.

**Vergleichsbeispiel 1: Sojaölacrylat (V1)**

Zu einer Mischung von 1636 g Sojaölepoxid (% EpO = 6,3), 30 g Triethylamin und 6000 ppm Hydrochinonmethylether (MEHQ) wurden im Verlauf von 10 Stunden bei 130 °C 465 g Acrylsäure unter kräftigem Rühren und Einleiten von Sauerstoff zugetropft. Die Reaktion wurde beendet, als die Säurezahl weniger als 50 betrug.
Das Produkt wies einen % EpO-Wert von 0,4 auf.

**Vergleichsbeispiel 2: Leinölacrylat (V 2)**

Zu einer Mischung von 1000 g Leinölepoxid (% EpO = 8,5), 30 g Triethylamin und 6000 ppm MEHQ wurden im Verlauf von 10 Stunden bei 130 °C 394 g Acrylsäure unter kräftigem Rühren und Einleiten von Sauerstoff zugetropft. Die Reaktion wurde beendet als die Säurezahl weniger als 50 betrug.
Das Produkt wies einen % EpO-Wert von 0,5 auf

**Beispiel 1 Linolaölacrylat (B1)**

Zu einer Mischung von 1195 g Linolaölepoxid (Epoxidzahl = 7,1), 30 g Triethylamin und 6000 ppm MEHQ wurden im Verlauf von 10 h bei 130 °C 382 g Acrylsäure unter krüftigem Rühren und Einleiten von Sauerstoff zugetropft Die Reaktion wurde beendet als die Säurezahl weniger als 50 betrug.
Das Produkt wies einen % EpO-Wert von 0,4 auf.

## Patentansprüche

1. Verwendung von Fett(meth)acrylaten zur Pigmentdispergierung, wobei die Fett(meth)acrylate erhältlich sind durch Umsetzung von epoxidierten Fettsäurestern und/oder epoxidierten Triglyceriden mit Acrylsäure und/oder Methacrylsäure, wobei die Umsetzung so geführt wird, dass der %-EpO-Gehalt der Fett(meth)acrylate unterhalb von 0,6 liegt und wobei für die den Fett(meth)acrylaten zu Grunde liegenden epoxidierten Fettsäurester und/oder epoxidierten Triglyceride folgende Maßgaben gelten:

    a) Der %-EpO-Gehalt der eingesetzten epoxidierten Fettsäurestern und/oder epoxidierten Triglyceride liegt oberhalb von 6,4.
    b) Weniger als 20 Mol-% der den epoxidierten Fettsäurestern und/oder epoxidierten Triglyceriden zu Grunde liegenden Fettsäurebausteine enthalten 3 oder mehr C=C-Doppelbindungen pro Fettsäurebaustein.
    c) Mehr als 60 Mol-% der den epoxidierten Fettsäurestern und/oder epoxidierten Triglyceriden zu Grunde liegenden Fettsäurebausteine enthalten 2 C=C-Doppelbindungen pro Fettsäurebaustein.

2. Pigmentkonzentrate bestehend aus

    • 0,1 bis 70 Gew.-% ein oder mehrerer Pigmente,
    • 0,1 bis 30 Gew.-% ein oder mehrerer Fett(meth)acrylate nach Anspruch 1,
    • 0 oder 15 bis 85 Gew.-% eines flüssigen Trägermediums.

3. Pigmentkonzentrate nach Anspruch 2, wobei das flüssige Trägermedium Wasser ist, mit der Maßgabe, dass es in einer Menge von 15 bis 85 Gew.-% vorliegt.

4. Pigmentkonzentrate nach Anspruch 3, wobei zusätzlich

    • 0 oder 0,1 bis 20 Gew.-% Lösungsmittel,
    • 0 oder 0,1 bis 20 Gew.-% Tensid

    enthalten sind, mit der Maßgabe, dass die Summe der beiden letztgenannten Komponenten nicht 0 sein darf.

## Claims

1. The use of fatty (meth)acrylates for dispersing pigments, the fatty (meth)acrylates being obtainable by reaction of epoxidized fatty acid esters and/or epoxidized triglycerides with acrylic acid and/or methacrylic acid, the reaction

being conducted in such a way that the %-EpO content of the fatty (meth)acrylates is below 0.6 and the following conditions applying to the epoxidized fatty acid esters and/or epoxidized triglycerides on which the fatty (meth) acrylates are based:

a) the %-EpO content of the epoxidized fatty acid esters and/or epoxidized triglycerides used is above 6.4;
b) less than 20 mol-% of the fatty acid units on which the epoxidized fatty acid esters and/or epoxidized triglycerides are based contain three or more C=C double bonds per fatty acid unit;
c) more than 60 mol-% of the fatty acid units on which the epoxidized fatty acid esters and/or epoxidized triglycerides are based contain two C=C double bonds per fatty acid unit.

**2.** Pigment concentrates consisting of

- 0.1 to 70% by weight of one or more pigments,
- 0.1 to 30% by weight of one or more fatty (meth)acrylates according to claim 1,
- 0 or 15 to 85% by weight of a liquid carrier medium.

**3.** Pigment concentratess as claimed in claim 2, **characterized in that** the liquid carrier medium is water, with the proviso that it is present in a quantity of 15 to 85% by weight.

**4.** Pigment concentrates as claimed in claim 3, **characterized in that**

- 0 or 0.1 to 20% by weight solvent.
- 0 or 0.1 to 20% by weight surfactant

are additionally present, with the proviso that the sum of the last two components mentioned must not be 0.

**Revendications**

**1.** Utilisation de (méth)acrylates gras pour la dispersion de pigments, les (méth)acrylates gras pouvant être obtenus par réaction d'esters d'acides gras époxydés et/ou de triglycérides époxydés avec de l'acide acrylique et/ou de l'acide méthacrylique, la réaction étant mise en oeuvre de manière que la teneur en EpO en % des (méth)acrylates gras soit inférieure à 0,6 et les conditions suivantes s'appliquant pour les esters d'acides gras époxydés et/ou les triglycérides époxydés servant de base aux (méth)acrylates gras :

a) la teneur en EpO en % des esters d'acides gras époxydés et/ou des triglycérides époxydés employés est supérieure à 6,4 ;
b) moins de 20 % en moles des composants d'acide gras servant de base aux esters d'acides gras époxydés et/ou aux triglycérides époxydés contiennent au moins 3 doubles liaisons C=C par composant d'acide gras ;
c) plus de 60 % en moles des composants d'acide gras servant de base aux esters d'acides gras époxydés et/ou aux triglycérides époxydés contiennent 2 doubles liaisons C=C par composant d'acide gras.

**2.** Concentrés pigmentaires composés :

- de 0,1 à 70 % en poids d'un ou de plusieurs pigments,
- de 0,1 à 30 % en poids d'un ou de plusieurs (méth)acrylate(s) gras selon la revendication 1,
- 0 ou de 15 à 85 % en poids d'un milieu de support liquide.

**3.** Concentrés pigmentaires selon la revendication 2, dans lesquels le milieu de support liquide est de l'eau, étant précisé que celle-ci est présente en quantité allant de 15 à 85 % en poids.

**4.** Concentrés pigmentaires selon la revendication 3, contenant en outre

- 0 ou de 0,1 à 20 % en poids de solvant,
- 0 ou de 0,1 à 20 % en poids de tensioactif,

étant précisé que la somme de ces deux derniers composants ne doit pas être nulle.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 610534 B
- WO 0017250 A


### In der Beschreibung aufgeführte Nicht-Patentliteratur


- Römpps Chemie-Lexikon. 1974, 2693-2695